(19) **Europäisches Patentamt**
**European Patent Office**
**Office européen des brevets**

(11) **EP 2 093 903 B1**

(12) **EUROPEAN PATENT SPECIFICATION**

(45) Date of publication and mention
of the grant of the patent:
**05.01.2011 Bulletin 2011/01**

(51) Int Cl.:
***H04B 7/26*** (2006.01)

(21) Application number: **08003113.1**

(22) Date of filing: **20.02.2008**

(54) **Method and a device for determining which symbols transferred in a downlink timeslot have to be selected by a half-duplex terminal**

Verfahren und Vorrichtung zur Bestimmung, welche in einem Downlink-Zeitschlitz übertragenen Signale durch ein Halbduplex-Endgerät ausgewählt werden sollen

Procédé et dispositif pour déterminer quels symboles transférés dans un intervalle de temps descendant doivent être sélectionnés par un terminal semi-duplex

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**26.08.2009 Bulletin 2009/35**

(73) Proprietors:
• **Mitsubishi Electric R&D Centre Europe B.V.**
**1119 NS Schiphol Rijk (NL)**
Designated Contracting States:
**FR**
• **MITSUBISHI ELECTRIC CORPORATION**
**Chiyoda-ku**
**Tokyo 100-8310 (JP)**
Designated Contracting States:
**AT BE BG CH CY CZ DE DK EE ES FI GB GR HR HU IE IS IT LI LT LU LV MC MT NL NO PL PT RO SE SI SK TR**

(72) Inventors:
• **Brunel, Loic**
**35708 Rennes Cedex 7 (FR)**
• **Mottier, David**
**35708 Rennes Cedex 7 (FR)**

(74) Representative: **Maillet, Alain**
**Cabinet Le Guen Maillet**
**5 Place Newquay**
**B.P. 70250**
**35802 Dinard Cedex (FR)**

(56) References cited:
**EP-A- 1 746 743    EP-A- 1 821 429**

**Description**

The present invention relates generally to a method and a device for determining, in a wireless cellular telecommunication network, which symbols transferred in a downlink timeslot have to be selected by a half-duplex terminal.

A full-duplex terminal is a terminal which is able to transmit and receive radio signals simultaneously.

A half-duplex terminal is a terminal which is not able to transmit and receive radio signals simultaneously. Half-duplex FDD terminals, operating in Frequency Division Duplex (FDD) mode, transmit and receive symbols on different frequency bands and at different time periods.

A half-duplex terminal may be a terminal with permanent inability to transmit and receive radio signals simultaneously, like a terminal with no duplexer or may be a a full-duplex terminal that is temporary forced not to transmit and receive radio signals simultaneously, for instance because of a spacing between the frequency bands used for transmission and reception that is not compatible with the duplexer of that terminal.

To handle half-duplex FDD terminals, some base stations use full-duplex FDD duplexing mode. Thereby, the base station can handle jointly full duplex-FDD terminals and half-duplex FDD terminals by appropriately scheduling downlink and uplink timeslots of half-duplex FDD terminals at different time.

Different types of base stations may be deployed in wireless cellular telecommunication networks to deal with half and full-duplex FDD terminals.

The base station types may vary according to the base station manufacturers and/or the owner of the wireless cellular telecommunication network. Especially, the way to manage a downlink timeslot directly followed by an uplink timeslot for a given terminal may differ.

Whatever the modes of transfer of symbols by the base stations, the half-duplex terminal needs to create an idle period in order to switch from downlink to uplink and transmit at the instant indicated by a timing advance information transferred by the base stations.

When a base station transmits symbols at time te to a half-duplex terminal, these symbols are received by the half-duplex terminal located at a distance d from the base station at a time equal to te + RTD(d)/2, where RTD(d) is the Round Trip Delay for the terminal. These symbols are processed by the half-duplex terminal which then may transmit also symbols over the uplink channel to the base station. Before transmitting symbols over the uplink channel, the half-duplex terminal has to wait for a period of time, in order to take into account the duration of hardware and software operations. For instance, this delay RTS is the maximum of the time needed by hardware equipments of the half-duplex terminals to switch between reception and transmission modes and the time needed by hardware equipments of the base station to switch between transmission and reception modes. Thus, the symbols transmitted over the uplink channel cannot be received at the base station BTS before a time tr equal to te + RTD(d) + RTS + $D_{DL}$, $D_{DL}$ being the total duration of the symbols the half-duplex terminal can receive in the downlink channel.

When the uplink channel is synchronous, the symbols transmitted in the uplink channel of a given cell of a base station have to be received at the same time tr by the base station, regardless of the distance separating the base station and the terminal. As the uplink symbols need to be received by the base station at the same time regardless of the distance separating the base station and each terminal comprised in its cell, the base station determines a timing advance information TA for each terminal.

In case the half-duplex terminal is scheduled in the uplink timeslot just following a preceding downlink timeslot comprising data for the half-duplex terminal, the half-duplex terminal applies its Timing Advance TA value for the transmission of symbols over the uplink channel in such a manner that the transmitted symbols are received at the base station from the terminal at the beginning of the uplink timeslot tr.

For example, if we consider a base station having a FDD cell radius of 10 km which is compatible with the Third Generation Partnership Project Long Term evolution (3GPP/LTE), an idle period duration which corresponds to two symbols duration needs to be created, either at both the base station and the half-duplex terminal sides or only at the half-duplex terminal side in order to make the base station able to handle half-duplex terminals located at any position in the cell. An idle period duration which corresponds to two symbols duration allows half-duplex terminals located at a distance from the base station up to 19.6 km to be handled by the base station.

An idle period duration which corresponds to one symbol duration allows only half-duplex terminals located at a distance from the base station up to 8.3 km to be handled by the base station. With such idle period duration, even if the quality of the signals of the measurement channel is sufficiently high, a half duplex terminal located at a distance larger than 8.3 km from the base station cannot be handled by the base station whereas a full-duplex terminal could.

Whereas the idle period needs to be created at the half-duplex terminal, the creation of the idle period at the base station is not mandatory. Three different modes of transfer of symbols can be envisaged when considering the idle period possibly created by the base station.

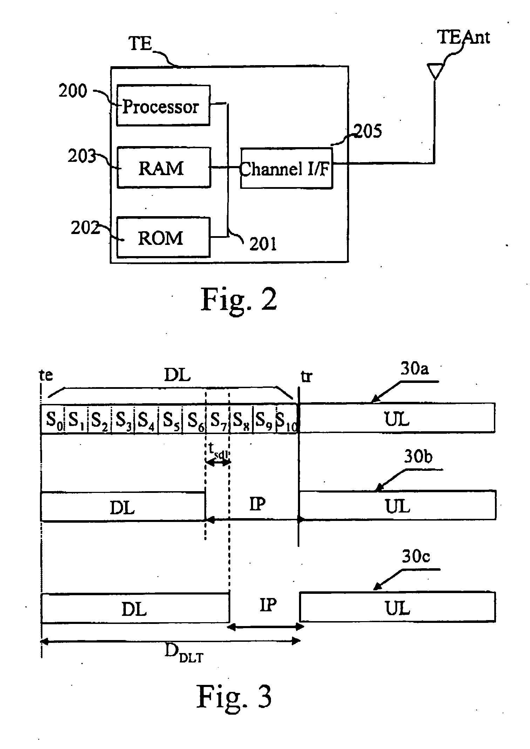

**Fig. 3** is a chronogram depicting the different modes of transfer of symbols by the base stations in the downlink channels.

A first mode consists, for the base station, in not creating an idle period for the base station. This reduces implementation costs since the base station transmits to a half-duplex FDD terminal as for a full duplex FDD terminal.

In the chronogram noted 30a, the base station transfers symbols in the downlink channel DL without any consideration of an idle period: The base station considers each terminal as being potentially a full-duplex terminal. The base station transfers symbols even if they are not usable by the half-duplex terminals. The base station transfers eleven symbols noted $S_0$ to $S_{10}$ in the downlink timeslot DL.

A second mode consists, for the base station, in creating an idle period which is the same for all half-duplex terminals in the cell of the base station. This minimises the power consumption of the base station, which thus avoids transmitting signals that cannot be effectively received by the half-duplex terminals. It also minimises development and hardware complexity of the base station.

In the chronogram noted 30b, the base station determines an idle period IP. The idle period IP is the same for any half-duplex terminal located in the cell of the base station. The base station transfers seven symbols noted $S_0$ to $S_6$ in the downlink timeslot DL. During the idle period, no symbols are transferred by the base station.

A third mode consists, for the base station, in creating an idle period which is specific to each half-duplex terminal according to its distance from the base station. Indeed, compared to an idle period fixed for all terminals in the cell that would be defined according to the maximum possible distance between a half-duplex terminal and the base station, the idle period may be shortened, or equivalently, some supplementary symbols may be transmitted. This is particularly useful for half-duplex terminals that are close to the base station. Indeed, better throughput is achieved for these terminals.

In the chronogram noted 30c, the base station determines, for each half-duplex terminal handled by the base station, the number of downlink symbols in a downlink timeslot that can be allocated to the half-duplex terminal.

From the European patent application published under the number EP1746743, if for a half-duplex terminal situated at a distance di from the base station BS, the timing advance information TA(di) is such that the total duration of the downlink timeslot $D_{DLT}$ minus the timing advance information TA(di) is contained between the duration of a number $n_{dl}$ of downlink symbols and the duration of a number $n_{dl}$ + 1 of downlink symbols, respectively plus the Receive Transmit Switch time or simply switching time and referred to as RTS, from receive to transmit modes, the base station can insert information for that half-duplex terminal in $n_{dl}$ downlink symbols. Here, tsdl defines the downlink symbol duration. This condition can be mathematically written as follows :

$$\text{if } n_{dl}.\ tsdl \leq D_{DLT}\text{-TA(di)} - RTS < (n_{dl} + 1)\ tsdl \text{ then data are transmitted on at most } n_{dl} \text{ symbols.}$$

Thus, for each terminal, an idle period IP of Integer((TA(di) + RTS)/tsdl)+1 symbols is created.

From that, the base station transfers eight symbols noted $S_0$ to $S_7$ in the downlink channel DL.

In order to enable the identification of the mode of transfer of symbols used by the base stations which handle half-duplex terminals, some appropriate signalling would be needed. However, such a signalling reduces the available throughput for effective data transmission, which is a drawback for the network and a loss of efficiency.

The present invention aims at avoiding that extra signalling is used for indicating to half-duplex terminals which mode of transfer of symbols is used by a base station.

To that end, the present invention concerns a method for determining, in a wireless cellular telecommunication network, which symbols transferred in a downlink timeslot have to be selected by a half-duplex terminal, the half-duplex terminal receiving a timing advance information to be used by the half-duplex terminal for determining the moment to transfer symbols in an uplink time slot, the downlink timeslot having a duration which is at most equal to a maximum duration, the symbols being consecutively transferred in the downlink timeslot, characterized in that the method comprises the steps executed by the half-duplex terminal of :

- calculating a period of time called idle period from the received timing advance information,
- selecting the group of symbols in the downlink timeslot which are comprised in the beginning part of the downlink timeslot, the beginning part of the downlink timeslot having a duration equal to the maximum downlink timeslot duration minus the idle period,
- measuring the power strength of the signals representative of the last symbol of the group of symbols,
- removing the last symbol from the group of symbols if the power strength of the signals representative of the last symbol is lower than a threshold.

The present invention concerns also a device for determining, in a wireless cellular telecommunication network, which symbols transferred in a downlink timeslot have to be selected by a half-duplex terminal, the half-duplex terminal receiving a timing advance information to be used by the half-duplex terminal for determining the moment to transfer symbols in an uplink timeslot, the downlink timeslot having a duration which is at most equal to a maximum duration, the symbols being consecutively transferred in the downlink timeslot, characterized in that the device is included in the half-duplex terminal and comprises :

- means for calculating a first period of time called idle period from the received timing advance information,
- means for selecting the group of symbols in the downlink timeslot which are comprised in the beginning part of the downlink timeslot, the beginning part of the downlink timeslot having a duration equal to the maximum downlink timeslot duration minus the idle period,
- means for measuring the power strength of the signals representative of the last symbol of the group of symbols,
- means for removing the last symbol from the group of symbols if the power strength of the signals representative of the last symbol is lower than a threshold.

Thus, no extra signalling is used for indicating to half-duplex terminals which mode of transfer of symbols is used by the base stations.

By selecting the group of symbols in the downlink timeslot which are comprised in the beginning part of the downlink timeslot, the beginning part of the downlink timeslot having a duration equal to the maximum downlink timeslot duration minus the idle period, the half-duplex terminal is able to receive symbols which are for the half-duplex terminal if the base station uses the first or the third mode of transfer of symbols in the downlink timeslot.

By measuring the power strength of the signals representative of the last symbol of the group of symbols and by removing the last symbol from the group of symbols if the power strength of the signals representative of the last symbol is lower than a threshold, the half-duplex terminal is able to receive symbols which are for the half-duplex terminal if the base station uses the second mode of transfer of symbols in the downlink timeslot.

According to a particular feature, the half-duplex terminal, as long as the power strength of the signals representative of the last symbol is lower than the threshold :

- measures the power strength of the signals representative of the last symbol of the group of symbols,
- removes the last symbol from the group of symbols if the power strength of the signals representative of the last selected symbol is lower than the threshold.

Thus, the method is efficient even if the duration of the idle period that is possibly used by the base station in the second or the third mode of transfer of symbols in the downlink timeslot differs by more than one symbol duration.

According to a particular feature, if the power strength of the signals representative of the last symbol is equal to or upper than the threshold, the half-duplex terminal demodulates the symbols of the group of symbols.

Thus, the half-duplex terminal demodulates all the symbols that the half-duplex terminal is able to receive.

According to a particular feature, the method is executed on each downlink timeslot.

Thus, the half-duplex terminal is able to efficiently decode data sent from a base station inserting idle periods in all downlink timeslots, including downlink timeslot not directly followed by an uplink timeslot.

According to a particular feature, the method is executed in each downlink timeslot which precedes an uplink timeslot.

Thus, the half-duplex terminal is able to efficiently decode data sent from a base station inserting idle periods only in downlink timeslots directly followed by an uplink timeslot.

According to a particular feature, the threshold is a predetermined value.

Thus, the measuring and removing process is accelerated and simplified.

According to a particular feature, the threshold is determined according to the signal power strength of the symbols of the group of symbols minored by a predetermined value.

Thus, the measuring and removing process can better take into account the dynamic variations of the received signals.

According to a particular feature, the threshold is determined according to the signal power strength of a part of the symbols of the group of symbols minored by a predetermined value.

Thus, the measuring and removing process is improved by only taking into account for the threshold computation symbols which have been effectively transmitted by the base station.

According to a particular feature, the threshold is determined according to the signal power strength of at least a part of the symbols of plural groups of symbols minored by a predetermined value.

Thus, the measuring process is less noisy. Moreover, the measuring is more accurate by avoiding taking into account symbols, e.g, pilot symbols, that may corrupt the threshold computation.

According to a particular feature, the idle period is calculated from the received timing advance according to the following formula:

$$IP_{TE} = Integer(((TA+RTS)/tsdl)+1)*tsdl,$$

where TA is the timing advance information, RTS the receive-to-transmit switch time of the terminal and tsdl is the duration of one symbol.

Thus, the determination of the idle period is easy to realise by the half-duplex terminal.

According to a particular feature, if the signals representative of at least one last symbol of the group of symbols have a power strength lower than the threshold, the half-duplex terminal determines that the base station sets the same idle period for each half-duplex terminal located in the cell of the base station.

Thus, the measuring and removing process does not have to be performed anymore, as long as the half-duplex terminal communicates with the same base station.

According to a particular feature, if the signals representative of the last symbol of the group of symbols have a power strength higher than the threshold during a given number of timeslots and the duration of the group of symbols changes at least once, the half-duplex terminal determines that the base station does not set an idle period or determines a half-duplex terminal specific idle period for each half-duplex terminal located in the cell of the base station.

Thus, the measuring and removing process does not have to be performed anymore, as long as the half-duplex terminal communicates with the same base station.

According to a particular feature, the wireless cellular telecommunication network uses Time Division Multiple Access or uses Frequency Division Multiple Access or uses Code Division Multiple Access technology in order to multiplex different terminals.

Thus, the base station can communicate with a plurality of half-duplex terminals, each of them being able to determine which mode of transfer of symbols is applied by the base station so as to optimise the transmission efficiency.

According to still another aspect, the present invention concerns a computer program which can be directly loadable into a programmable device, comprising instructions or portions of code for implementing the steps of the method according to the invention, when said computer program is executed on a programmable device.

Since the features and advantages relating to the computer program are the same as those set out above related to the method and device according to the invention, they will not be repeated here.

The characteristics of the invention will emerge more clearly from a reading of the following description of an example embodiment, the said description being produced with reference to the accompanying drawings, among which :

Fig. 1 is a diagram representing the architecture of the wireless cellular telecommunication network in which the present invention is implemented;

Fig. 2 is a diagram representing the architecture of a half-duplex terminal of the wireless telecommunication system according to the present invention;

Fig. 3 is a chronogram depicting the different modes of transfer of symbols by the base stations in the downlink channels ;

Fig. 4a is a chronogram depicting the process on symbols received by the half-duplex terminal in the downlink channel when the base station does not set an idle period ;

Fig. 4b is a chronogram depicting the process on symbols received by the half-duplex terminal in the downlink channel when the base station sets the same idle period for each half-duplex terminal located in the cell of the base station ;

Fig. 4c is a chronogram depicting the process on symbols received by the half-duplex terminal in the downlink channel when the base station determines a half-duplex terminal specific number of symbols inserted in the downlink timeslot for each half-duplex terminal located in the cell of the base station ;

Fig. 5 is an example of an algorithm executed by a half-duplex terminal according to a first mode of realisation of the present invention ;

Fig. 6 is an example of an algorithm executed by a half-duplex terminal according to a second mode of realisation of the present invention ;

Fig. 7a is a first example of a block diagram of the receiving part of the channel interface of a half-duplex terminal when the wireless cellular telecommunication network uses Time Division Multiple Access scheme;

Fig. 7b is a block diagram of the receiving part of the channel interface of a half-duplex terminal when the wireless cellular telecommunication network uses Frequency Division Multiple Access scheme ;

Fig. 7c is a block diagram of the receiving part of the channel interface of a half-duplex terminal when the wireless cellular telecommunication network uses Code Division Multiple Access scheme;

Fig. 7d is a second example of a block diagram of the receiving part of the channel interface of a half-duplex terminal when the wireless cellular telecommunication network uses Time Division Multiple Access scheme ;

Fig. 7e is a third example of a block diagram of the receiving part of the channel interface of a half-duplex terminal when the wireless cellular telecommunication network uses Time Division Multiple Access scheme.

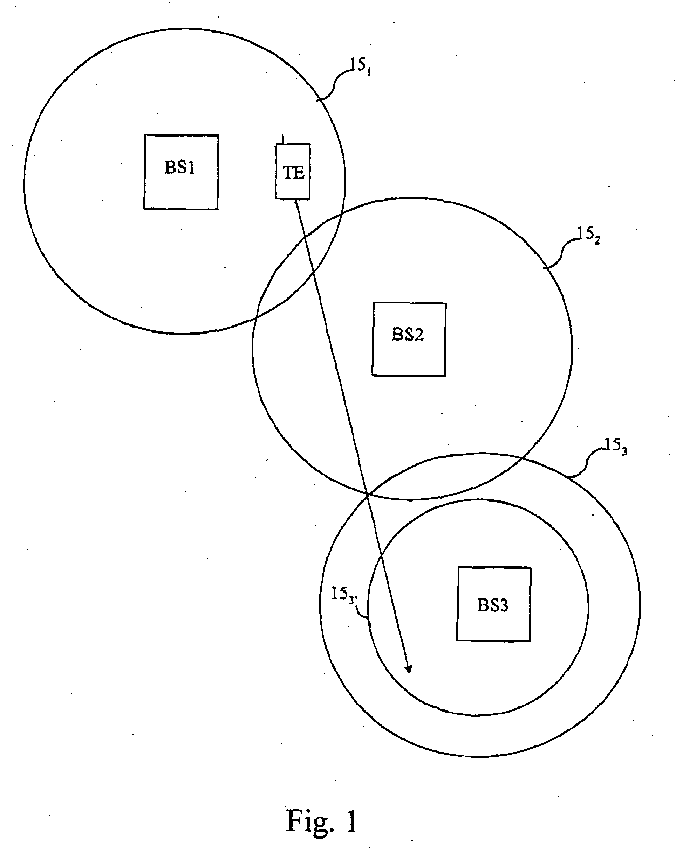

**Fig. 1** is a diagram representing the architecture of the wireless cellular telecommunication network in which the present invention is implemented.

The wireless cellular telecommunication network may use half duplex Frequency Division Duplexing scheme.

In full duplex Frequency Division Duplexing scheme, the signals transferred in uplink and downlink channels are duplexed in same sub frames, named also timeslots, in different frequency bands.

In half duplex FDD scheme, from the half-duplex terminal TE side, the signals transferred in uplink and downlink channels are duplexed in different sub frames, named also timeslots and in different frequency bands. It should be noted that in such case, a base station may be able to use a full duplex Frequency Division Duplexing scheme whilst communicating with several half-duplex FDD terminals at the same time by appropriately ordering the timeslots of each half-duplex FDD terminal.

The wireless cellular telecommunication network may use the Time Division Multiple Access technology or may use the Frequency Division Multiple Access technology or may use the Code Division Multiple Access technology in order to multiplex different terminals.

When a base station BS transfers symbols to a terminal TE, the data, the signals or the messages are transferred through a downlink channel.

When a terminal TE transfers symbols to the base station BS, the signals, the messages or data are transferred through uplink channel.

In the wireless cellular telecommunication network of the Fig. 1, a terminal TE located in the cell $15_1$ of a base station BS1 is moving to the cell $15_3$ of the base station BS3 through the cell $15_2$ of the base station BS2.

Only three base stations BS are shown in the Fig. 1 for the sake of simplicity but in practice, the wireless cellular telecommunication network is composed of a more important number of base stations BS.

The cell $15_1$ of the base station BS1 is the area in which the power strength of the signals transferred by the base station BS1, e.g. the one transferred in the measurement channel of the base station BS1, are received by a terminal TE located in the cell $15_1$ at a level which is upper than a predetermined value.

The cell $15_2$ of the base station BS2 is the area in which the power strength of the signals transferred by the base station BS2, e.g. the one transferred in the measurement channel of the base station BS2, are received by a terminal TE located in the cell $15_2$ at a level which is upper than the predetermined value.

The cell $15_3$ of the base station BS3 is the area in which the power strength of the signals transferred by the base station BS3, e.g. the one transferred in the measurement channel of the base station BS3, are received by a terminal TE located in the cell $15_3$ at a level which is upper than the predetermined value.

The area $15_{3'}$ of the base station BS3 is the area in which, for each half-duplex terminal TE located in $15_{3'}$, the base station BS can insert information for that half-duplex terminal TE in $n_{dl}$ downlink symbols.

The area of the cell $15_3$ which is not included in the area $15_{3'}$, is the area in which, for each half-duplex terminal TE located in that area, the base station BS cannot insert information for that half-duplex terminal TE in $n_{dl}$ downlink symbols, but in a lower number of downlink symbols.

The idle period for the half-duplex terminals TE comprised in the area $15_{3'}$ is smaller than the idle period for the half-duplex terminals TE located in the area of the cell $15_3$ which is not included in the area $15_{3'}$.

The base stations BS comprise means for transferring downlink signals or messages to the terminal TE and means for receiving messages according to the present invention.

The base stations BS are also named nodes or nodes B or enhanced nodes B or access points.

The terminal TE is a half-duplex terminal like a mobile phone, a personal digital assistant, or a personal computer. The terminal TE is also named a user equipment.

The wireless telecommunication network may or may not be cell-synchronised. In case of cell-synchronisation, the signals originated from different cells 15 or base stations BS are simultaneously transmitted.

More precisely, the signals are structured in frames, which are themselves composed of symbols. Cell synchronisation may be ensured at the symbol level meaning that the transmission time of a symbol at a given cell 15 or base station BS matches the transmission time of a symbol at any other cell 15 or base station BS. Cell synchronisation may also be ensured at the frame level. In that case, the transmission time of a frame at a given cell 15 or base station BS matches the transmission time of a frame at any other cell 15 or base station BS. Cell synchronisation can be carried out by including a GNSS (Global Navigation Satellite System) in each base station BS.

For example, the base station BS1 is a base station BS which does not set an idle period as disclosed in 30a of the Fig. 3, the base station BS2 is a base station BS which sets the same idle period for each half-duplex terminal TE located in the cell $15_2$ of the base station BS2 as disclosed in 30b of the Fig. 3 and the base station BS3 is a base station BS which sets a half-duplex terminal specific idle period for each half-duplex terminal located in the cell $15_3$ of the base station BS3 as disclosed in 30c of the Fig. 3.

According to the invention, the half-duplex terminal TE is able to receive and process downlink symbols from the base stations BS1, BS2 and BS3 even if these base stations BS transfer symbols in downlink timeslots using different modes of transmission as disclosed in the Fig. 3.

Each half-duplex terminal TE receives from the base station BS which handles it, the Timing Advance information TA it has to apply in order to transfer uplink symbols.

According to the invention, each half-duplex terminal TE determines, from the timing advance information TA, an idle period $IP_{TE}$.

The idle period $IP_{TE}$ enables the half-duplex terminal TE to switch from downlink to uplink and transmit at the instant indicated by the timing advance information and the half-duplex terminal TE does not demodulate the symbols which may be comprised in the idle period $IP_{TE}$. In other words, the symbols received during the idle period $IP_{TE}$ are punctured by the half-duplex terminal TE.

It has to be noted here that the information data of a whole downlink timeslot may be encoded and interleaved together. Thus, puncturing the last received symbols corresponds, after deinterleaving, to puncturing some coded bits spread over the whole transmitted codeword. If the puncturing level, i.e. the equivalent code rate after puncturing is not too high, the decoder is able to recover the transmitted information data with some performance degradation according to the level of puncturing.

According to the invention, each half-duplex terminal TE measures the power strength of the signals representative of symbols included in the remaining downlink transmission duration $D_{DLT}$ - $IP_{TE}$ and compares the power strength to a threshold value T. If a tail part of the signals has a power strength lower than the threshold T, the corresponding symbol or symbols are not demodulated or are punctured by the half-duplex terminal TE. $D_{DLT}$ is the maximum duration assuming no idle period IP at the base station BS side.

By comparing to a threshold the power strength of each symbol in the remaining downlink transmission duration $D_{DLT}$ - $IP_{TE}$ at the half-duplex terminal side, it is possible to further detect a possible additional symbol which should not be demodulated or should be punctured as being only representative of noise and/or interference. Such case occurs when the idle period $IP_{BS}$ has been created at the base station BS side and when this idle period $IP_{BS}$ is larger than the first idle period $IP_{TE}$ as it has been disclosed in 30b of the Fig. 3.

Fig. 2 is a diagram representing the architecture of a half-duplex terminal of the wireless telecommunication system according to the present invention.

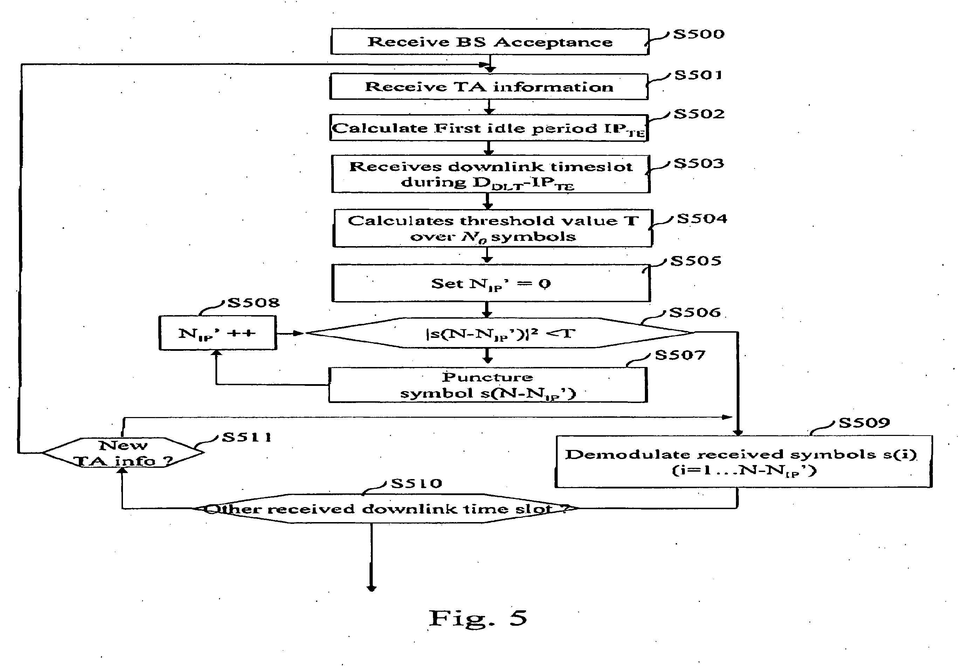

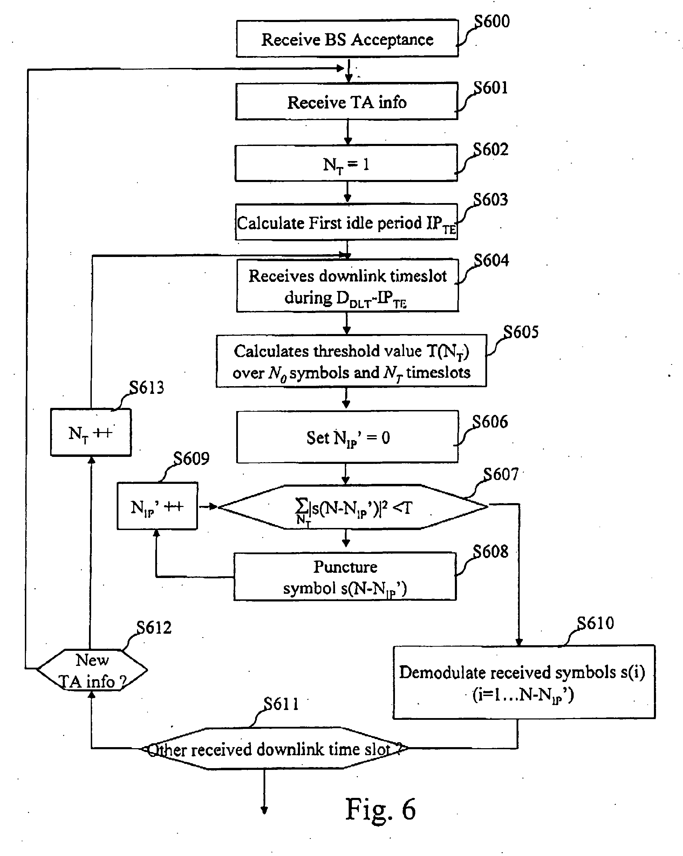

The half-duplex terminal TE has, for example, an architecture based on components connected together by a bus 201 and a processor 200 controlled by programs related to the algorithms as disclosed in the Fig. 5 or 6.

It has to be noted here that the half-duplex terminal TE is, in a variant, implemented under the form of one or several dedicated integrated circuits which execute the same operations as the ones executed by the processor 200 as disclosed hereinafter.

The bus 201 links the processor 200 to a read only memory ROM 202, a random access memory RAM 203 and a channel interface 205.

The read only memory ROM 202 contains instructions of the programs related to the algorithms as disclosed in the Fig. 5 or 6 which are transferred, when the half-duplex terminal TE is powered on to the random access memory RAM 203.

The RAM memory 203 contains registers intended to receive variables, and the instructions of the programs related to the algorithms as disclosed in the Fig. 5 or 6.

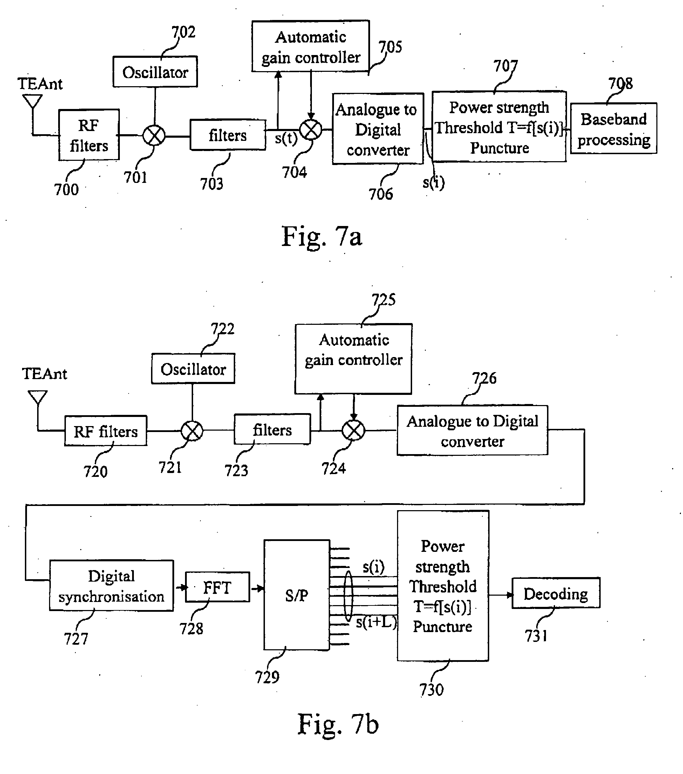

The channel interface 205 comprises means for transferring and/or receiving signals and/or messages to/from base stations BS through the antenna TEAnt and means for measuring the signals received, for example the signals transferred in the measurement channels. The channel interface 205 is disclosed in more detail in reference to the Figs. 7a to 7e.

Fig. 7a is a first example of a block diagram of the receiving part of the channel interface of a half-duplex terminal when the wireless cellular telecommunication network uses Time Division Multiple Access scheme.

The block diagram represents the modules involved in the reception of the group of symbols selected after computation of the idle period from the received timing advance information.

The receiving part of the channel interface 205 comprises Radio frequency filters 700 which filter the signals received by the antenna TEAnt, a multiplier 701 which multiplies the filtered signal by a signal provided by an oscillator 702 in order to provide baseband signals.

The baseband signals are filtered in filters 703. The resulting signals are transferred to an automatic gain controller 705 which determines multiplication coefficients to be used by a multiplier 704 for multiplying the resulting signals in order to match the dynamic of the signals to the characteristics of the Analogue to Digital Converter 706.

The multiplied resulting signals are converted by an Analogue to Digital Converter 706 and provide the symbols s(i) comprised in the downlink timeslot.

The symbols s(i) are transferred to a module 707 that measures the power strength of the symbols s(i), determines the threshold T from this power if the threshold T is not predetermined and punctures the symbols s(i) if their power strength is smaller than T.

The symbols s(i) which have not been punctured are transferred to a classical base-band processing unit 708.

By puncturing the symbols, the power of which being smaller than T before classical base-band processing, the baseband processing is shortened and the computational resources are saved. None of the usual baseband processes (e.g., channel estimation) are performed on the punctured symbols. It appears as a demultiplexing of one signal stream into two signal streams, the first one being further processed and the second one not being further processed.

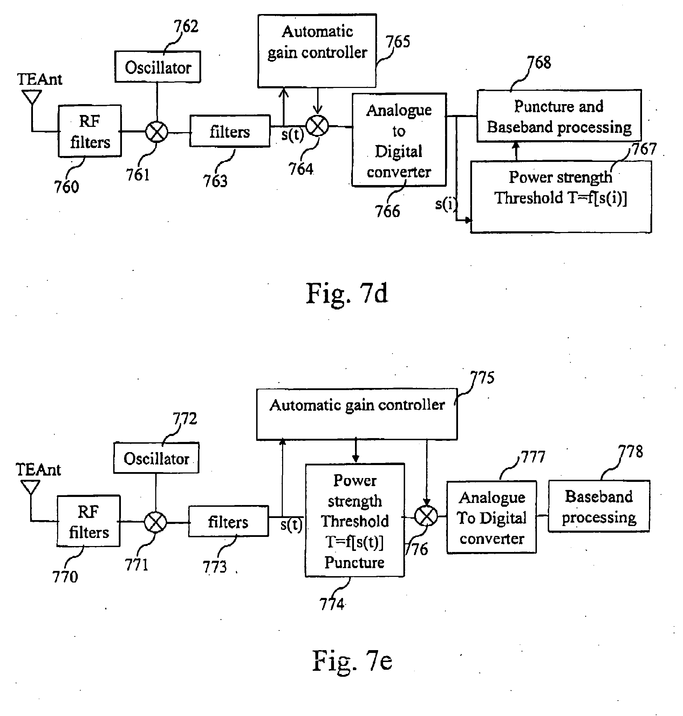

Fig. 7d is a second example of a block diagram of the receiving part of the channel interface of a half-duplex terminal when the wireless cellular telecommunication network uses Time Division Multiple Access scheme.

The example of the Fig. 7d is similar to the example of the Fig. 7a. The modules 700 to 706 are identical to the modules 760 to 766. The Fig. 7d differs from the Fig. 7a, in the sense that the puncturing may be performed within a classical baseband processing module 768 at the decoding stage by setting to the appropriate value the reliability metric of the decoded bits corresponding to the punctured symbols.

The module 767 measures the power strength of the symbols s(i), determines the threshold T from this power if the threshold T is not predetermined.

Fig. 7e is a third example of a block diagram of the receiving part of the channel interface of a half-duplex terminal when the wireless cellular telecommunication network uses Time Division Multiple Access scheme.

The example of the Fig. 7e is similar to the example of the Fig. 7a. The modules 700 to 703 are identical to the modules 770 to 773. The Fig. 7e differs from the Fig. 7a, in the sense that the threshold computation and puncturing may be performed in the analogue domain. This latter approach further reduces the processing tasks of the terminal.

The filtered analogue signals s(t) are transferred to an Automatic gain controller 775 and to a module 777 that measures the power strength of the symbols s(t), determines the threshold T from this power if the threshold T is not predetermined and punctures the symbols s(t) if their power strength is smaller than T.

The automatic gain controller 775 determines multiplication coefficients to be used by a multiplier 776 for multiplying the output of the module 774 in order to match the dynamic of the signals to the characteristics of the Analogue to Digital Converter 777.

The multiplied resulting signals are converted by an Analogue to Digital Converter 777 and provides the symbols s(i) not punctured.

The symbols s(i) are transferred to a classical base-band processing unit 778.

**Fig. 7b** is a block diagram of the receiving part of the channel interface of a half-duplex terminal when the wireless cellular telecommunication network uses Frequency Division Multiple Access scheme, for example an OFDMA scheme.

The block diagram represents the modules involved in the reception of the group of symbols selected after computation of the idle period from the received timing advance information.

The receiving part of the channel interface 205 comprises Radio frequency filters 700 which filter the signals received by the antenna TEAnt, a multiplier 721 which multiplies the filtered signal by a signal provided by an oscillator 722 in order to provide baseband signals.

The baseband signals are filtered by filters 723. The resulting signals are transferred to an automatic gain controller 725 which determines multiplication coefficients to be used by a multiplier 724 for multiplying the resulting signals in order to match the dynamic of the signals to the characteristics of the Analogue to Digital Converter 726.

The multiplied resulting signals are converted by the Analogue to Digital Converter 726 in order to provide digital samples which are transferred to a digital synchronization module 728 which synchronises the received symbols. The synchronised samples are transformed into the frequency domain by a Fast Fourier Transform module 728 and transposed from serial form to parallel form by a serial to parallel converter 729.

The symbols mapped on the frequencies allocated to the half-duplex terminal TE are fed to a module 730 which measures the power of the symbols s(i), determines the threshold T from this power if the threshold T is not predetermined and punctures the symbols s(i) if their power is smaller than T. The symbols which are not punctured are sent to the decoding module 731.

The receiving part of the channel interface 205 comprises a demodulator which demodulates the symbols selected according to the present invention.

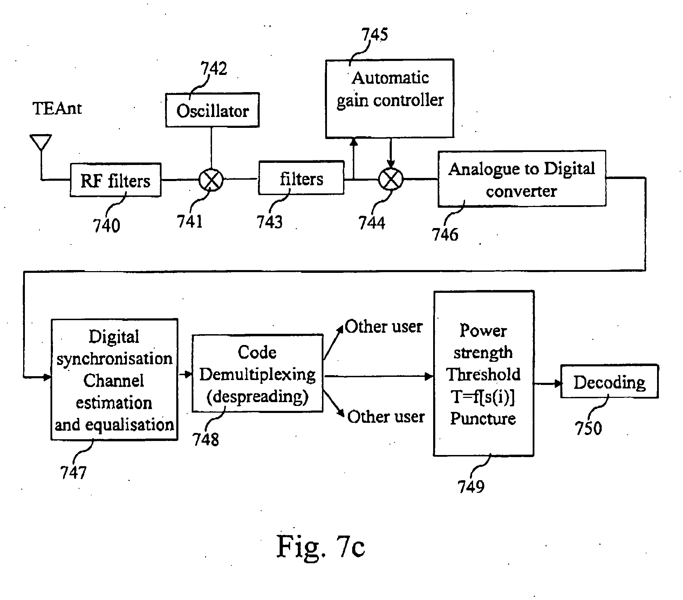

**Fig. 7c** is a block diagram of the receiving part of the channel interface of a half-duplex terminal when the wireless cellular telecommunication network uses Code Division Multiple Access scheme.

The block diagram represents the modules involved in the reception of the group of symbols selected after computation of the idle period from the received timing advance information.

The receiving part of the channel interface 205 comprises Radio frequency filters 740 which filter the signals received by the antenna TEAnt, a multiplier 741 which multiplies the filtered signal by a signal provided by an oscillator 742 in order to provide baseband signals.

The baseband signals are filtered by filters 743. The resulting signals are transferred to an automatic gain controller 745 which determines multiplication coefficients to be used by a multiplier 744 for multiplying the resulting signals in order to match the dynamic of the signals to the characteristics of the Analogue to Digital Converter 746.

The multiplied resulting signals are converted by the Analogue to Digital Converter 746 in order to provide digital samples which are transferred to a digital synchronisation module 748 which synchronises the received symbols, proceeds to a channel estimation and equalisation. The synchronised symbols are de-multiplexed using the spreading code allocated to the half-duplex terminal in order to retrieve the symbols to be selected according to the present invention.

The demultiplexed symbols s(i) are fed to a module 749 which measures the power of the symbols s(i), determines the threshold T from this power if the threshold T is not predetermined, and punctures the symbols s(i) if their power is smaller than T.

The symbols which are not punctured are sent to the decoding module 750.

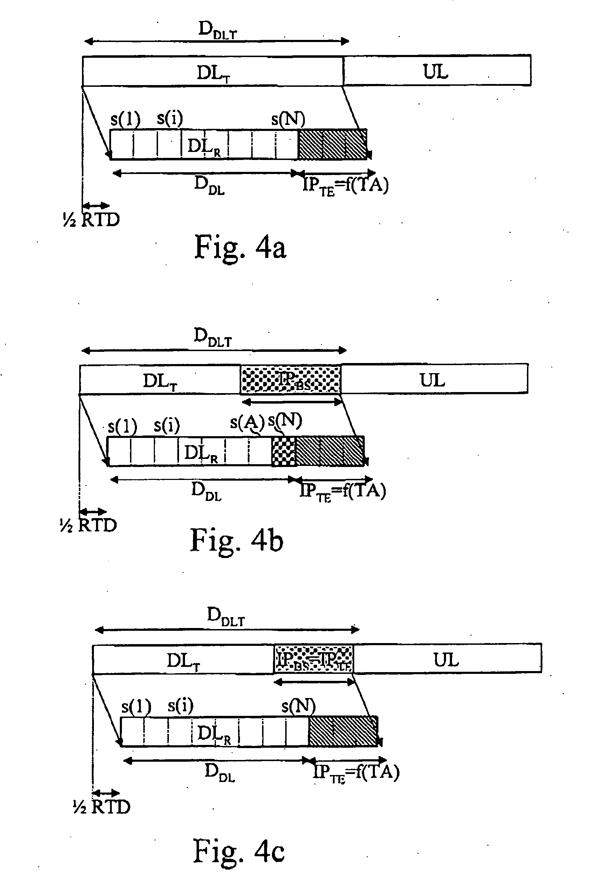

**Fig. 4a** is a chronogram depicting the process on symbols received by the half-duplex terminal in the downlink channel when the base station does not set an idle period.

In the Fig. 4a, the base station BS, as example the base station BS1, transfers symbols in the downlink channel $DL_T$ without any consideration of an idle period as it has been disclosed in the chronogram noted 30a of the Fig. 3. The total duration of the downlink timeslot is equal to $D_{DLT}$.

Each half-duplex terminal TE receives from the base station BS the Timing Advance TA it has to apply in order to transfer uplink symbols.

According to the invention, each half-duplex terminal TE determines, from the timing advance information TA, an idle period $IP_{TE}=f(TA)$. During the idle period $IP_{TE}$, the three last received symbols of $DL_T$ are punctured by the half-duplex terminal TE. Only the symbols comprised in $DL_R$ are selected as symbols which are contained in the beginning part of the downlink timeslot $DL_T$ which has a duration $D_{DL}$ equal to the maximum downlink timeslot duration $D_{DLT}$ minus the idle period $IP_{TE}$.

The selected symbols are demodulated.

As a result, after puncturing, the half-duplex terminal deduces the number N of symbols s(1)... s(N) that are expected to be present in the resulting downlink transmission duration $D_{DL}$.

**Fig. 4b** is a chronogram depicting the process on symbols received by the half-duplex terminal in the downlink channel when the base station sets the same idle period for each half-duplex terminal located in the cell of the base station.

In the Fig. 4b, the base station BS, as example the base station BS2, determines an idle period $IP_{BS}$. The idle period $IP_{BS}$ is the same for any half-duplex terminal TE located in the cell $15_2$ of the base station BS2. During the idle period, no symbol is transferred by the base station BS2.

Each half-duplex terminal TE receives from the base station BS2, the Timing advance information TA it has to apply in order to transfer uplink symbols.

According to the invention, each half-duplex terminal TE determines, from the timing advance information TA, an idle period $IP_{TE}=f(TA)$.

During the idle period $IP_{TE}$, the three last received symbols of $DL_T$ are punctured by the half-duplex terminal TE. Only the symbols comprised in $DL_R$ are selected as symbols which are comprised in the beginning part of the downlink timeslot $DL_T$ which has a duration $D_{DL}$ equal to the maximum downlink timeslot duration $D_{DLT}$ minus the idle period $IP_{TE}$.

In that case, it may happen that the $IP_{BS}>IP_{TE}$ for a half-duplex terminal TE is not located at the cell 15 edge. Thus, only a part A<N of the symbols s(1)... s(N), which are expected to be present in the resulting downlink transmission duration, are symbols to be received. The N-A tail symbols are only noise and/or interference, since no useful signal has been actually sent to the half-duplex terminal TE during $IP_{BS}$.

According to the invention, the half-duplex terminal TE measures the power strength of the signal representative of the last symbol of the group of symbols and removes the last symbol from the group of symbols if the power strength of the signals representative of the last symbol is lower than a threshold. The last symbol is removed as long as the power strength of the signals representative of the last symbol is lower than the threshold.

If the power strength of the signals representative of the last symbol is equal to or upper than the threshold, the symbols of the group of symbols are demodulated.

By removing the last symbol or symbols, the half-duplex terminal TE avoids decoding signals which do not contain any symbol in practice. Thus, the processing resources of the receiver are not only saved but the quality of decoding of the truly received symbols is also larger.

**Fig. 4c** is a chronogram depicting the process on symbols received by the half-duplex terminal in the downlink channel when the base station BS determines a half-duplex terminal specific number of symbols inserted in the downlink timeslot for each half-duplex terminal located in the cell of the base station.

In the chronogram noted 30c, the base station BS, as example the base station BS3, determines, for each half-duplex terminal TE handled by the base station BS3, the number of downlink symbols in a downlink timeslot that can be allocated to the half-duplex terminal TE.

As the number of downlink symbols varies according to the half-duplex terminal TE, the idle period varies also according to the half-duplex terminal TE.

Each half-duplex terminal TE receives from the base station BS3, the Timing advance information TA it has to apply in order to transfer uplink symbols.

According to the invention, each half-duplex terminal TE determines, from the timing advance information TA, an idle period $IP_{TE}$. During the idle period $IP_{TE}$, the three last received symbols are punctured by the half-duplex terminal TE.

During the idle period $IP_{TE}$, the three last received symbols of $DL_T$ are punctured by the half-duplex terminal TE. Only the symbols comprised in $DL_R$ are selected as symbols which are comprised in the beginning part of the downlink timeslot $DL_T$ which has a duration $D_{DL}$ equal to the maximum downlink timeslot duration $D_{DLT}$ minus the idle period $IP_{TE}$.

According to the invention, the half-duplex terminal TE measures the power strength of the signals representative of the last symbol of the group of symbols and keeps the last symbol in the group of symbols as the power strength of the signals representative of the last symbol is equal to or upper than the threshold because the base station BS3 determines the idle period $IP_{BS}$ according to the half-duplex terminal TE, $IP_{TE} = IP_{BS}$.

**Fig. 5** is an example of an algorithm executed by a half-duplex terminal according to a first mode of realisation of the present invention.

More precisely, the present algorithm is executed by the processor 200 of each half-duplex terminal TE for each downlink timeslot or for each downlink timeslot which precedes an uplink timeslot.

At step S500, the processor 200 of the half-duplex terminal TE receives from a base station BS, as example the base station BS1, a message representative of an acceptance to transfer symbols to the half-duplex terminal TE in the next downlink timeslot. The message is received through the channel interface 205.

At next step S501, the processor 200 receives from the base station BS a timing advance information it has to apply in order to transfer symbols in the uplink timeslot.

At next step S502, the processor 200 calculates a first idle period $IP_{TE}$ from the timing advance information TA received at step S501.

The idle period may be calculated from the received timing advance information according to the following formula:

$$IP_{TE}=Integer(((TA+RTS)/tsdl)+1)*tsdl,$$

where tsdl is the duration of one symbol and RTS is the receive-to-transmit switch time of the terminal.

At next step S503, the processor commands the channel interface to select the group of symbols in the downlink timeslot which are comprised in the beginning part of the downlink timeslot which is equal to the maximum downlink timeslot duration minus the idle period $D_{DLT} - IP_{TE}$.

$D_{DLT}$ is the maximum duration of a downlink timeslot, known by each half-duplex terminal TE.

At next step S504, the processor 200 calculates a threshold value noted T over No symbols.

The value T of the threshold may be predefined.

The value T of the threshold may be dynamically computed by the half-duplex terminal TE based on the received signals.

The value T of the threshold may be equal to the power strength of the signals averaged during the expected received downlink transmission duration minus a margin noted M.

The margin M may be adapted according to the signal over interference plus noise ratio measured by the half-duplex terminal TE so as to match a desired level of false alarm probability or miss detection probability. Thus, the sensitivity of the threshold computation is tuned according to the half-duplex terminal TE environment.

Alternatively, the margin M may be fixed in the system to limit the processing complexity.

Assuming that the expected received downlink transmission duration $D_{DL}$ corresponds to the duration of N symbols s(i) with i=1...N, the threshold T is calculated as follows:

$$T_{dB} = 10\log_{10}\left(\frac{1}{N}\sum_{i=1}^{N}|s(i)|^2\right) - M \quad \text{expressed in decibels.}$$

$$T = 10^{T_{dB}/10}$$

It has to be noted here that the expected received downlink transmission duration $D_{DL}$ which corresponds to the duration of N symbols s(i) with i=1...N may be wrong in case $IP_{BS}>IP_{TE}$. Even in such case, the calculated threshold T may provide good results as the power is estimated over a large number of symbols.

The value T of the threshold may be equal to the power strength P of at least a part $N_0 < N$ of the symbols of the signals received during the downlink transmission timeslot minus the margin M:

$$T_{dB} = 10 \log_{10}\left(\frac{1}{N_0} \sum_{i=1}^{N_0} |s(i)|^2\right) - M \quad \text{[dB]}$$

$$T = 10^{T_{dB}/10}$$

At next step S505, the processor 200 sets a variable noted $N_{IP}'$ to the null value.

At next step S506, the processor 200 checks if the signal power strength $|s(N - N_{IP}')|^2$ of the received symbol of index $N$-$N_{IP}'$ is lower than the threshold T.

If $|s(N - N_{IP}')|^2 < T$, the processor 200 moves to step S507. Otherwise, the processor 200 moves to step S509.

By comparing to a threshold the power strength of each symbol in the expected received downlink transmission duration $D_{DL}$ at the half-duplex terminal TE side, it is possible to further detect if an idle period $IP_{BS}$ has been created at the base station and if the idle period $IP_{BS}$ created at the base station is larger than the first idle period $IP_{TE}$.

According to the example of the Fig. 4a, $|s(N\text{-}0)|^2 > T$, the processor 200 moves to step S509.

At step S509, the processor 200 commands the demodulation of the received symbols s(i) with i= 1 to N- $N_{IP}'$ with $N_{IP}$=0.

The half-duplex terminal TE, in any of the cases shown in the Figs. 4a to 4c, performs a decoding assuming that modulation symbols of a given modulation constellation have been sent.

Based on the distance of the received signal to the candidate transmitted signals (modulation symbols), the channel estimate and the noise plus interference variance, it is possible to compute a soft value for each coded bit, which is called observation from the channel.

However, if no signal has been transmitted, the assumption on the modulation constellation is wrong and some noise can be erroneously interpreted as a reliable observation. The soft value may be a probability and in the case no signal has been transmitted it should be always equal to 0.5: the observation does not give any information on the coded bit since it has not been transmitted.

Likewise, the soft value may be the logarithm of a probability and it should always be equal to 0 when no signal has been transmitted. As soon as a value different to 0.5 (or 0) is computed before decoding, the decoding performance is degraded. Therefore, the absence of transmitted signal is detected, in order to set all corresponding soft values of coded bit observation to 0.5 (or 0).

At next step S510, the processor 200 checks if other symbols have to be received in another downlink timeslot.

If no symbols have to be received, the processor 200 interrupts the present algorithm.

If other symbols have to be received in another downlink timeslot, the processor 200 moves to step S511 and checks if a new timing advance information is received from a base station BS.

If no new timing advance information TA is received from a base station BS, the processor 200 returns to step S509 and demodulates the symbols comprised in the other downlink timeslot as already described.

If a new timing advance information is received from a base station BS, the processor 200 returns to step S501 and executes again the present algorithm.

When the half-duplex terminal TE moves from the cell $15_1$ of the base station BS1 to the cell $15_2$ of the base station BS2, a handover is executed from the base station BS1 to the base station BS2 and a next timing advance information is received from the base station BS2.

The processor 200 calculates at step S501 a first idle period $IP_{TE}$ from the timing advance information TA, commands the channel interface 205 to receive the symbols comprised in the downlink timeslot during the time period $D_{DLT}$ -$JP_{TE}$ and calculates the threshold value noted T.

At step S505, the processor 200 sets the variable noted $N_{IP}'$ to the null value. At next step S506, the processor 200 checks if the signal power strength $|s(N\text{-}N_{IP}')|^2$ of the received symbol of index N-$N_{IP}'$ is lower than the threshold T.

If $|s(N - N_{IP}')|^2 < T$, the processor 200 moves to step S507.

According to the example of the Fig. 4b, $|s(N\text{-}0)|^2 < T$, the processor 200 removes the symbol S(N) from the group of selected symbols, moves to step S508, increments the variable $N_{IP}'$ of one unit and returns to steps S506.

According to the example of the Fig. 4b, the signal power strength of the symbol s(A) equal to $|s(N\text{-}1)|^2$ is not lower than T, the processor 200 moves to step S509 and commands the demodulation of the received symbols s(i) with i= 1 to N- $N_{IP}$'.

By not demodulating the symbol s(N), a second idle period is set.

In the example of the Fig. 4b, $IP_{BS}>IP_{TE}$ for the half-duplex terminal TE when the half-duplex terminal TE is not located at the cell edge. Only a part A<N of the symbols s(1)... s(N) are symbols to be received. The N-A tail symbols are only noise and/or interference, since no useful signal has been actually sent to the half-duplex terminal TE of interest during $IP_{BS}$.

The puncturing of the N-A tail symbols makes the reception process more efficient because the half-duplex terminal TE avoids decoding signals which do not contain any symbol in practice.

When the half-duplex terminal TE moves from the cell $15_2$ of the base station BS2 to the cell $15_3$ of the base station BS3, a handover is executed from the base station BS2 to the base station BS3 and a next timing advance is received from the base station BS3.

The processor 200 calculates at step S501 a first idle period $IP_{TE}$ from the timing advance information TA, commands the channel interface to receive the symbols comprised in the downlink timeslot during the time period $D_{DLT}$ -$IP_{TE}$ and calculates the threshold value noted T.

At step S505, the processor 200 sets the variable noted $N_{IP}$' to the null value.

At next step S506, the processor 200 checks if the signal power strength $|s(N\text{-}N_{IP})|^2$ of the received symbol of index N-$N_{IP}$' is lower than the threshold T.

According to the example of the Fig. 4c, as $IP_{BS}=IP_{TE}$, $|s(N\text{-}0)|^2>T$, the processor 200 moves to step S509 and commands the demodulation of the received symbols s(i) with i= 1 to N- $N_{IP}$'.

**Fig. 6** is an example of an algorithm executed by a half-duplex terminal according to a second mode of realisation of the present invention.

More precisely, the present algorithm is executed by the processor 200 of each half-duplex terminal TE for each downlink timeslot or for each downlink timeslot which precedes an uplink timeslot.

The present algorithm differs from the algorithm of the Fig. 5 in the sense that the threshold T is determined over plural timeslots.

At step S600, the processor 200 of the half-duplex terminal TE receives from a base station BS, as example the base station BS1, a message representative of an acceptance to transfer symbols to the half-duplex terminal TE in the next downlink timeslot. The message is received through the channel interface 205.

At next step S601, the processor 200 receives from the base station BS a timing advance information it has to apply in order to transfer symbols in the uplink timeslot.

At next step S602, the processor sets a variable $N_T$ to the value one. $N_T$ is representative of the number of timeslots used for determining the threshold T.

At next step S603, the processor 200 calculates a first idle period $IP_{TE}$ from the timing advance information TA received at step S601.

The idle period may be calculated from the received timing advance information according to the following formula:

$$IP_{TE}=Integer(((TA+RTS)/tsdl)+1)*tsdl,$$

where tsdl is the duration of one symbol and RTS is the receive-to-transmit switch time of the terminal.

At next step S604, the processor commands the channel interface to select the group of symbols in the downlink timeslot which are comprised in the beginning part of the downlink timeslot which is equal to the maximum downlink timeslot duration minus the idle period $D_{DLT}$ -$IP_{TE}$.

At next step S604, the processor 200 calculates a threshold value noted $T(N_T)$ over No symbols and $N_T$ timeslots.

$$T_{dB}(N_T) = 10\log_{10}\left(\frac{1}{N_0}\sum_{j=1}^{N_T}\sum_{i=1}^{N_0}|s(i)|^2\right) - M \quad [dB]$$

$$T(N_T) = 10^{T_{dh}(N_T)/10}$$

At next step S606, the processor 200 sets a variable noted $N_{IP}$' to the null value.

At next step S607, the processor 200 checks if the $\sum_{i=1}^{N_T} |s(N - N'_{IP})|^2$ of the received symbol of index N-$N_{IP}$' is lower than the threshold T.

If If $\sum_{i=1}^{N_T} |s(N - N'_{IP})|^2 <$ T, the processor 200 moves to step S608. Otherwise, the processor 200 moves to step S609.

At step S609, the processor 200 increments the variable $N_{IP}$' by one and returns to step S607.

At step S610, the processor 200 commands the demodulation of the received symbols s(i) with i= 1 to N- $N_{IP}$'.

At next step S611, the processor 200 checks if other symbols have to be received in another downlink timeslot.

If no symbols have to be received, the processor 200 interrupts the present algorithm.

If other symbols have to be received in another downlink timeslot, the processor 200 moves to step S612 and checks if a new timing advance information is received from a base station BS.

If no new timing advance information is received from a base station BS, the processor 200 moves to step S613, increments $N_T$ by one and returns to step S604.

If a new timing advance information is received from a base station BS, the processor 200 returns to step S601 and executes again the present algorithm.

It has to be noted here that, if N- $N_{IP}$' is found to be equal to a fixed value A<N, or in other words if the signals representative of at least one last symbol of the group of symbols have a power strength lower than the threshold, during a given number of timeslots, the base station BS can be considered as setting the same idle period for each half-duplex terminal TE located in the cell of the base station BS. A can be used by the half-duplex terminal TE in all timeslots as long as it communicates with the same base station BS.

If A is found to be equal to N during a given number of timeslots and N changes of value at least once, or in other words if the signals representative of the last symbol of the group of symbols have a power strength higher than the threshold, during a given number of timeslots and N changes of value at least once, the base station BS can be considered as not setting an idle period or as determining half-duplex terminal specific idle period for each half-duplex terminal located in the cell of the base station.

Naturally, many modifications can be made to the embodiments of the invention described above without departing from the scope of the present invention.

**Claims**

1. Method for determining, in a wireless cellular telecommunication network, which symbols transferred in a downlink timeslot have to be selected by a half-duplex terminal (TE), the half-duplex terminal receiving (S501, S601) a timing advance information to be used by the half-duplex terminal for determining the moment to transfer symbols in an uplink time slot (UL), the downlink timeslot having a duration which is at most equal to a maximum duration, the symbols being consecutively transferred in the downlink timeslot, the method comprising the steps executed by the half-duplex terminal of :

   - calculating (S502, S603) a period of time called idle period from the received timing advance information,
   - selecting (S503, S604) the group of symbols in the downlink timeslot which are comprised in the beginning part of the downlink timeslot, the beginning part of the downlink timeslot having a duration equal to the maximum downlink timeslot duration minus the idle period,

   **characterized in that** the method comprises further step of :

   - measuring (S506, S607) the power strength of the signals representative of the last symbol of the group of symbols,

- removing (S507, S608) the last symbol from the group of symbols if the power strength of the signals representative of the last symbol is lower than a threshold.

2. Method according to claim 1, **characterized in that** the method further comprises the steps, executed as long as the power strength of the signals representative of the last symbol is lower than the threshold :

- measuring (S506, S607) the power strength of the signals representative of the last symbol of the group of symbols,
- removing (S507, S608) the last symbol from the group of symbols if the power strength of the signals representative of the last selected symbol is lower than the threshold.

3. Method according to claim 2, **characterized in that** if the power strength of the signals representative of the last symbol is equal to or upper than the threshold, the method comprises further step of demodulating (S509, S610) the symbols of the group of symbols.

4. Method according to any of the claims 1 to 3, **characterized in that** the method is executed on each downlink timeslot.

5. Method according to any of the claims 1 to 3, **characterized in that** the method is executed in each downlink timeslot which precedes an uplink timeslot.

6. Method according to any of the claims 1 to 5, **characterized in that** the threshold is a predetermined value.

7. Method according to any of the claims 1 to 5, **characterized in that** the threshold is determined according to the signal power strength of the symbols of the group of symbols minored by a predetermined value.

8. Method according to any of the claims 1 to 5, **characterized in that** the threshold is determined according to the signal power strength of a part of the symbols of the group of symbols minored by a predetermined value.

9. Method according to any of the claims 1 to 5, **characterized in that** the threshold is determined according to the signal power strength of at least a part of the symbols of plural groups of symbols minored by a predetermined value.

10. Method according to any of the claims 1 to 9, **characterized in that** the idle period is calculated from the received timing advance information according to the following formula:

$$IP_{TE}=Integer(((TA+RTS)/tsdl)+1)*tsdl,$$

where TA is the timing advance information, RTS is the receive-to-transmit switch time of the terminal and tsdl is the duration of one symbol.

11. Method according to any of the claims 1 to 10, **characterized in that** if the signals representative of at least one last symbol of the group of symbols have a power strength lower than the threshold during at least one timeslot, the half-duplex terminal determines that the base station sets the same idle period for each half-duplex terminal located in the cell of the base station.

12. Method according to any of the claims 1 to 10, **characterized in that** if the signals representative of the last symbol of the group of symbols have a power strength higher than the threshold during a given number of timeslots and the duration of the group of symbols changes at least once, the half-duplex terminal determines that the base station does not set an idle period or determines a half-duplex terminal specific idle period for each half-duplex terminal located in the cell of the base station.

13. Method according to any of the claims 1 to 12, **characterized in that** the wireless cellular telecommunication network uses Time Division Multiple Access or uses Frequency Division Multiple Access or uses Code Division Multiple Access technology in order to multiplex different terminals.

14. Device for determining, in a wireless cellular telecommunication network, which symbols transferred in a downlink timeslot have to be selected by a half-duplex terminal (TE) , the half-duplex terminal receiving a timing advance information to be used by the half-duplex terminal for determining the moment to transfer symbols in an uplink time slot, the downlink timeslot having a duration which is at most equal to a maximum duration, the symbols being consecutively transferred in the downlink timeslot, the device is included in the half-duplex terminal and comprises :

- means for calculating (200) a first period of time called idle period from the received timing advance information,
- means for selecting (200) the group of symbols in the downlink timeslot which are comprised in the beginning part of the downlink timeslot, the beginning part of the downlink timeslot having a duration equal to the maximum downlink timeslot duration minus the idle period,

**characterized in that** the device further comprises :

- means for measuring (205) the power strength of the signals representative of the last symbol of the group of symbols,
- means for removing (200) the last symbol from the group of symbols if the power strength of the signals representative of the last symbol is lower than a threshold.

15. Computer program which can be directly loadable into a programmable device, comprising instructions or portions of code for implementing the steps of the method according to claims 1 or 13, when said computer program is executed on a programmable device.

**Patentansprüche**

1. Verfahren zum Bestimmen, in einem drahtlosen zellularen Telekommunikationsnetz, welche in einem Abwärtsstrekkenzeitschlitz transferierten Symbole durch ein Halbduplex-Endgerät (TE) ausgewählt werden müssen, wobei das Halbduplex-Endgerät eine durch das Halbduplex-Endgerät zum Bestimmen des Zeitpunkts zum Transferieren von Symbolen in einem Aufwärtsstreckenzeitschlitz (UL) zu verwendende Zeitfortschrittsinformation empfängt (S501, S601), wobei der Abwärtsstreckenzeitschlitz eine Dauer hat, die höchstens gleich einer maximalen Dauer ist, wobei die Symbole in dem Abwärtsstreckenzeitschlitz aufeinanderfolgend transferiert werden, wobei das Verfahren die durch das Halbduplex-Endgerät ausgeführten folgenden Schritte aufweist:

- Berechnen (S502, S603) einer Zeitperiode, die Ruhezeit genannt wird, aus der empfangenen Zeitfortschrittsinformation,
- Auswählen (S503, S604) der Gruppe von Symbolen in dem Abwärtsstreckenzeitschlitz, die in dem Anfangsteil des Abwärtsstreckenzeitschlitzes umfasst sind, wobei der Anfangsteil des Abwärtsstreckenzeitschlitzes eine Dauer gleich der maximalen Abwärtsstreckenzeitschlitzdauer minus der Ruhezeit hat,

**dadurch gekennzeichnet, dass** das Verfahren folgende weitere Schritte aufweist:

- Messen (S506, S607) der Energiestärke der Signale, die das letzte Symbole der Gruppe von Symbolen darstellen,
- Entfernen (S507, S608) des letzten Symbols von der Gruppe von Symbolen, wenn die Energiestärke der Signale, die das letzte Symbol darstellen, niedriger als eine Schwelle ist.

2. Verfahren nach Anspruch 1, **dadurch gekennzeichnet, dass** das Verfahren weiterhin die folgenden Schritte aufweist, die ausführt werden, solange die Energiestärke der Signale, die das letzte Symbol darstellen, niedriger als die Schwelle ist:

- Messen (S506, S607) der Energiestärke der Signale, die das letzte Symbol der Gruppe von Symbolen darstellen,
- Entfernen (S507, S608) des letzten Symbols von der Gruppe von Symbolen, wenn die Energiestärke der Signale, die das letzte ausgewählte Symbol darstellen, niedriger als die Schwelle ist.

3. Verfahren nach Anspruch 2, **dadurch gekennzeichnet, dass** dann, wenn die Energiestärke der Signale, die das letzte Symbol darstellen, gleich der Schwelle oder oberhalb von dieser ist, das Verfahren einen weiteren Schritt zum Demodulieren (S509, S610) der Symbole der Gruppe von Symbolen aufweist.

4. Verfahren nach einem der Ansprüche 1 bis 3, **dadurch gekennzeichnet, dass** das Verfahren auf jedem Abwärtsstreckenzeitschlitz ausgeführt wird.

5. Verfahren nach einem der Ansprüche 1 bis 3, **dadurch gekennzeichnet, dass** das Verfahren in jedem Abwärtsstreckenzeitschlitz ausgeführt wird, der einem Aufwärtsstreckenzeitschlitz vorangeht.

6. Verfahren nach einem der Ansprüche 1 bis 5, **dadurch gekennzeichnet, dass** die Schwelle ein vorbestimmter Wert ist.

7. Verfahren nach einem der Ansprüche 1 bis 5, **dadurch gekennzeichnet, dass** die Schwelle gemäß der Signalenergiestärke der Symbole der Gruppe von Symbolen, vermindert um einen vorbestimmten Wert, bestimmt wird.

8. Verfahren nach einem der Ansprüche 1 bis 5, **dadurch gekennzeichnet, dass** die Schwelle gemäß der Signalenergiestärke eines Teils der Symbole der Gruppe von Symbolen, vermindert um einen vorbestimmten Wert, bestimmt wird.

9. Verfahren nach einem der Ansprüche 1 bis 5, **dadurch gekennzeichnet, dass** die Schwelle gemäß der Signalenergiestärke wenigstens eines Teils der Symbole mehrerer Gruppen von Symbolen, vermindert um einen vorbestimmten Wert, bestimmt wird.

10. Verfahren nach einem der Ansprüche 1 bis 9, **dadurch gekennzeichnet, dass** die Ruhezeit aus der empfangenen Zeitfortschrittsinformation gemäß der folgenden Formel berechnet wird:

$$IP_{TE}=Integer(((TA+RTS)/tsdl)+1)*tsdl,$$

wobei TA die Zeitfortschrittsinformation ist, RTS die Empfangen-zu-Senden-Umschaltzeit des Endgeräts ist und tdsl die Dauer von einem Symbol ist.

11. Verfahren nach einem der Ansprüche 1 bis 10, **dadurch gekennzeichnet, dass** dann, wenn die Signale, die wenigstens ein letztes Symbol der Gruppe von Symbolen darstellen, während wenigstens eines Zeitschlitzes eine Energiestärke haben, die niedriger als die Schwelle ist, das Halbduplex-Endgerät bestimmt, dass die Basisstation dieselbe Ruhezeit für jedes in der Zelle der Basisstation lokalisierte Halbduplex-Endgerät einstellt.

12. Verfahren nach einem der Ansprüche 1 bis 10, **dadurch gekennzeichnet, dass** dann, wenn die Signale, die das letzte Symbol der Gruppe von Symbolen darstellen, während einer gegebenen Anzahl von Zeitschlitzen eine Energiestärke haben, die höher als die Schwelle ist, und die Dauer der Gruppe von Symbolen sich wenigstens einmal ändert, das Halbduplex-Endgerät bestimmt, dass die Basisstation keine Ruhezeit einstellt, oder eine Ruhezeit, die für ein Halbduplex-Endgerät spezifisch ist, für jedes in der Zelle der Basisstation lokalisierte Halbduplex-Endgerät bestimmt.

13. Verfahren nach einem der Ansprüche 1 bis 12, **dadurch gekennzeichnet, dass** das drahtlose zellulare Telekommunikationsnetz eine Zeitvielfachzugriffs- oder eine Frequenzvielfachzugriffs- verwendet oder eine Codevielfachfachzugriffs-Technologie verwendet, um unterschiedliche Endgeräte zu multiplexen.

14. Vorrichtung zum Bestimmen, in einem drahtlosen zellularen Telekommunikationsnetz, welche in einem Abwärtsstreckenzeitschlitz transferierten Symbole durch ein Halbduplex-Endgerät (TE) ausgewählt werden müssen, wobei das Halbduplex-Endgerät eine durch das Halbduplex-Endgerät zum Bestimmen des Zeitpunkts zum Transferieren von Symbolen in einem Aufwärtsstreckenzeitschlitz zu verwendende Zeitfortschrittsinformation empfängt, wobei der Abwärtsstreckenzeitschlitz eine Dauer hat, die höchstens gleich einer maximalen Dauer ist, wobei die Symbole in dem Abwärtsstreckenzeitschlitz aufeinanderfolgend transferiert werden, wobei die Vorrichtung in dem Halbduplex-Endgerät enthalten ist und folgendes aufweist:

    - eine Einrichtung zum Berechnen (200) einer ersten Zeitperiode, die Ruhezeit genannt wird, aus der empfangenen Zeitfortschrittsinformation,
    - eine Einrichtung zum Auswählen (200) der Gruppe von Symbolen in dem Abwärtsstreckenzeitschlitz, die in dem Anfangsteil des Abwärtsstreckenzeitschlitzes umfasst sind, wobei der Anfangsteil des Abwärtsstreckenzeitschlitzes eine Dauer gleich der maximalen Abwärtsstreckenzeitschlitzdauer minus der Ruhezeit hat,

**dadurch gekennzeichnet, dass** die Vorrichtung weiterhin folgendes aufweist:

- eine Einrichtung zum Messen (200) der Energiestärke der Signale, die das letzte Symbole der Gruppe von Symbolen darstellen,
- eine Einrichtung zum Entfernen (200) des letzten Symbols von der Gruppe von Symbolen, wenn die Energiestärke der Signale, die das letzte Symbol darstellen, niedriger als eine Schwelle ist.

15. Computerprogramm, das direkt ladbar in eine programmierbare Vorrichtung sein kann, mit Anweisungen oder Teilbereichen eines Codes zum Implementieren der Schritte des Verfahrens nach den Ansprüchen 1 oder 13, wenn das Computerprogramm auf einer programmierbaren Vorrichtung ausgeführt wird.

**Revendications**

1. Méthode pour déterminer, dans un réseau de télécommunication cellulaire sans fil, quels symboles transférés dans un intervalle de temps d'une liaison descendante doivent être choisis par un terminal semi-duplex (TE), le terminal semi-duplex recevant (S501, S601) une information d'avance de synchronisation à employer par le terminal semi-duplex pour déterminer le moment pour transférer des symboles dans un intervalle de temps de liaison montante (UL), l'intervalle de temps de liaison descendante ayant une durée qui est au plus égale à une durée maximum, les symboles étant consécutivement transférés dans l'intervalle de temps de liaison descendante, la méthode comportant les étapes exécutées par le terminal semi-duplex de :

- calcul (S502, S603) d'une période de temps appelée période à vide à partir de l'information d'avance de synchronisation reçue,
- sélection (S503, S604) du groupe de symboles dans l'intervalle de temps de liaison descendante qui sont compris dans la partie au début de l'intervalle de temps de la liaison descendante, la partie au début de l'intervalle de la liaison descendante ayant une durée égale à la durée maximale de l'intervalle de temps de liaison descendante moins la période à vide,

**caractérisée en ce que** la méthode comporte en outre les étapes de :

- mesure (S506, S607) de la puissance des signaux représentatifs du dernier symbole du groupe de symboles,
- élimination (S507, S608) du dernier symbole du groupe de symboles si la puissance des signaux représentatifs du dernier symbole du groupe de symboles est inférieure à un seuil.

2. Méthode selon la revendication 1, **caractérisée en ce que** la méthode comporte en outre les étapes, exécutées tant que la puissance des signaux représentatifs du dernier symbole du groupe de symboles est inférieure au seuil de :

- mesure (S506, S607) de la puissance des signaux représentatifs du dernier symbole du groupe de symboles,
- élimination (S507, S608) du dernier symbole du groupe de symboles si la puissance des signaux représentatifs du dernier symbole du groupe de symboles choisi est inférieure au seuil.

3. Méthode selon la revendication 2, **caractérisée en ce que** si la puissance des signaux représentatifs du dernier symbole du groupe de symboles est égale ou supérieure au seuil, la méthode comporte en outre l'étape de démodulation (S509, S610) des symboles du groupe de symboles.

4. Méthode selon l'une des revendications 1 à 3, **caractérisée en ce que** la méthode est exécutée sur chaque intervalle de temps de la liaison descendante.

5. Méthode selon l'une des revendications 1 à 3, **caractérisée en ce que** la méthode est exécutée dans chaque intervalle de temps de liaison descendante qui précède un intervalle de temps de liaison montante.

6. Méthode selon l'une des revendications 1 à 5, **caractérisée en ce que** le seuil est une valeur prédéterminée.

7. Méthode selon l'une des revendications 1 à 5, **caractérisée en ce que** le seuil est déterminé selon la puissance du signal des symboles du groupe de symboles minorée par une valeur prédéterminée.

8. Méthode selon l'une des revendications 1 à 5, **caractérisée en ce que** le seuil est déterminé selon la puissance du signal d'une partie des symboles du groupe de symboles minorée par une valeur prédéterminée.

9. Méthode selon l'une des revendications 1 à 5, **caractérisée en ce que** le seuil est déterminé selon la puissance du signal d'au moins une partie des symboles d'une pluralité de groupes de symboles minorée par une valeur prédéterminée.

10. Méthode selon l'une des revendications 1 à 9, **caractérisée en ce que** la période à vide est calculée à partir de l'information d'avance de synchronisation reçue selon la formule suivante :

$$IP_{TE} = Entier(((TA+RTS)/tsdl)+1)*tsdl,$$

où le TA est l'information d'avance de synchronisation, RTS est la période de commutation de réception vers transmission du terminal et tsdl est la durée d'un symbole.

11. Méthode selon l'une des revendications 1 à 10, **caractérisée en ce que** si les signaux représentatifs d'au moins un dernier symbole du groupe de symboles ont une puissance inférieure au seuil pendant au moins un intervalle de temps, le terminal semi-duplex détermine que la station de base fixe la même période à vide pour chaque terminal semi-duplex situé dans la cellule de la station de base.

12. Méthode selon l'une des revendications 1 à 10, **caractérisée en ce que** si les signaux représentatifs du dernier symbole du groupe de symboles ont une puissance supérieure au seuil pendant un nombre donné d'intervalles de temps et la durée du groupe de symboles change au moins une fois, le terminal semi-duplex détermine que la station de base ne fixe pas une période à vide ou détermine une période à vide spécifique au terminal semi-duplex pour chaque terminal semi-duplex situé dans la cellule de la station de base.

13. Méthode selon l'une des revendications 1 à 12, **caractérisée en ce que** le réseau de télécommunication cellulaire sans fil emploie l'accès multiple de division de temps ou emploie l'accès multiple par répartition en fréquence ou emploie la technologie d'accès multiple de division des codes afin de multiplexer différents terminaux.

14. Dispositif pour déterminer, dans un réseau de télécommunication cellulaire sans fil, quels symboles transférés dans un intervalle de temps de liaison descendante doivent être choisis par une terminal semi-duplex (TE), le terminal semi-duplex recevant une information d'avance de synchronisation à employer par le terminal semi-duplex pour déterminer le moment pour transférer des symboles dans un intervalle de temps de liaison montante, l'intervalle de temps de liaison descendante ayant une durée qui est au plus égale à une durée maximum, les symboles étant consécutivement transférés dans l'intervalle de temps de la liaison descendante, le dispositif étant inclus dans le terminal semi-duplex et comportant :

- les moyens de calcul (200) d'une première période de temps appelée période à vide à partir de l'information d'avance de synchronisation reçue,
- des moyens de sélection (200) du groupe de symboles dans l'intervalle de temps de liaison descendante qui sont compris dans la partie au début de l'intervalle de temps de la liaison descendante, la partie au début de l'intervalle de la liaison descendante ayant une durée égale à la durée maximale de l'intervalle de temps de liaison descendante moins la période à vide,

**caractérisé en ce que** le dispositif comporte en outre :

- des moyens de mesure (205) de la puissance des signaux représentatifs du dernier symbole du groupe de symboles,
- des moyens d'élimination (200) du dernier symbole du groupe de symboles si la puissance des signaux représentatifs du dernier symbole du groupe de symboles est inférieure à un seuil.

15. Programme informatique qui peut être directement chargeable dans un dispositif programmable, comportant des instructions ou des parties du code pour mettre en application les étapes de la méthode selon les revendications 1 à 13, quand le programme informatique dit est exécuté sur un dispositif programmable.

Fig. 1

Fig. 2

Fig. 3

Fig. 4a

Fig. 4b

Fig. 4c

```
                        Receive BS Acceptance        ╱ S500

                        Receive TA information        ╱ S501

                   Calculate First idle period IP_{TE}   ╱ S502

                   Receives downlink timeslot     ╱ S503
                        during D_{DLT}-IP_{TE}

                   Calculates threshold value T    ╱ S504
                        over N_0 symbols

                                                    ╱ S505
                        Set N_{IP}' = 0

       ╱ S508
   N_{IP}' ++  ───►      |s(N-N_{IP}')|² < T        ╱ S506

                                                    ╱ S507
                         Puncture
                      symbol s(N-N_{IP}')


     New                                          ╱ S509
   TA info ?  ╱ S511              Demodulate received symbols s(i)
                                        (i=1...N-N_{IP}')

                       ╱ S510
         Other received downlink time slot ?
```

$$Fig. 5$$

Fig. 6

Fig. 7a

Fig. 7b

TEAnt

745
Automatic
gain controller

742
Oscillator

RF filters    filters    Analogue to Digital
converter

740    741    743    744    746

Digital
synchronisation
Channel
estimation
and equalisation

Code
Demultiplexing
(despreading)

Other user

Power
strength
Threshold
$T=f[s(i)]$
Puncture

Other user

Decoding

747    748    749    750

# Fig. 7c

Fig. 7d

Fig. 7e

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1746743 A